# EUROPEAN PATENT APPLICATION

(11) **EP 2 007 161 A1**
(43) Date of publication of application: **24.12.2008**
(21) Application number: 07016058.5
(22) Date of filing: 18.06.2007
(51) Int. Cl.: H04Q 7/38

(54) **Non-3GPP access to 3GPP access inter-rat handover with resource preparation**

(62) Divisional of application: 07386015.7
(71) Applicant: Motorola, Inc., Schaumburg, IL 60196 (US)
(72) Inventor: Saltkintzis K. Apostolis, Athens, Attika GR-15341 (GR); Burbidge, C.Richard, Hook, Hampshire RG27 9NP (GB)
(74) Representative: Papaconstantinou, Helen

(57) **Abstract**

A pre-registration phase (800) and a resource preparation phase (900) reduce latency when a user equipment (UE) (210) hands over from a non-3GPP radio access (220) such as WiMAX to an 3GPP radio access network (230) such as E-UTRAN. During a pre-registration phase (800), a Forward Attachment Function (260) receives a pre-attach request message (833) and creates (860) a 3GPP mobility management context for the UE (210) that is valid for E-UTRAN access. During a resource preparation phase (900), the mobility management context is transferred to a mobility management entity (MME) (240) and radio and transport resources are reserved for the UE (210) at the target E-UTRAN cell (230). When a handover is initiated (910) by either the UE or the non-3GPP network, the time-consuming authentication and authorization procedures that are performed during the process of pre-registration can be skipped. Additionally, radio and transport resources have already been assigned to the UE and thus do not have to be set-up when the handover executes.

## Description

### CROSS REFERENCE TO RELATED APPLICATIONS

This application is related to EPC patent application 07386015.7 filed on June 18, 2007 by Motorola, Inc. and entitled "Non-3GPP Access to E-UTRAN Access Inter-RAT Handover."

### FIELD OF THE DISCLOSURE

This disclosure relates generally to handover of a user equipment (UE) from one radio access system to another radio access system, specifically from a non-3GPP radio access to a 3GPP radio access, such as an Evolved Universal Terrestrial Radio Access Network (E-UTRAN), using a single radio in the UE.

### BACKGROUND OF THE DISCLOSURE

Radio access systems defined by the Third Generation Partnership Project (3GPP) include the GSM EDGE Radio Access Network (GERAN), the Universal Terrestrial Radio Access Network (UTRAN), and the Evolved UTRAN (E-UTRAN). Various methodologies have been developed for handover of a UE from one type of 3GPP radio access system to another type of 3GPP radio access system.

For example, a UE can be handed over from a GERAN radio system or a UTRAN radio system to an E-UTRAN radio system and vice versa. According to 3GPP TS 23.401 Section 5.5.2.2, an inter-RAT handover from UTRAN or GERAN to E-UTRAN includes a preparation phase that sends information related to the 3GPP source access network (i.e., the current network serving the UE) to the E-UTRAN target access network. Next, the execution phase hands the UE from the 3GPP source network over to the 3GPP target network and transfers its ongoing sessions from the 3GPP source network to the 3GPP target network. Because the 3GPP organization develops the technical specifications of both the source network and the target network, 3GPP source access network information has been designed to be easily mapped to 3GPP target access network information.

Radio access systems not defined by the Third Generation Partnership Project (3GPP) are called non-3GPP Radio Access Technologies (RATs). Such non-3GPP RATs are found in systems such as WiMAX (defined by IEEE Standard 802.16), WiFi (defined by IEEE Standard 802.11), and CDMA2000 Evolution-Data Optimized (EV-DO) (defined by Third Generation Partnership Project 2, 3GPP2). Because non-3GPP radio systems are not related to 3GPP radio systems, it is typically very difficult (or even infeasible) to map non-3GPP source access network information (including non-3GPP security information) to target 3GPP access network information.

Although handover of a UE between a 3GPP system and a non-3GPP system is currently possible, executing a handover using a single-radio UE (i.e., using a single transceiver module) is slow because the target 3GPP access network information must be generated during the handover process without the benefit of using mapped information from the source access network (e.g., mapping the non-3GPP security information to the 3GPP security information). A faster handover would be beneficial - especially if the handover latency could be reduced without requiring any changes to pre-existing non-3GPP and 3GPP networks. The various aspects, features and advantages of the disclosure will become more fully apparent to those having ordinary skill in the art upon careful consideration of the following Drawings and accompanying Detailed Description.

### BRIEF DESCRIPTION OF THE DRAWINGS

FIG. 1 shows an evolved 3GPP architecture with a UE handing over from a non-3GPP IP access to a 3GPP access in accordance with an embodiment.

FIG. 2 shows an evolved 3GPP architecture with a UE handing over from WiMAX access to E-UTRAN access in accordance with an embodiment.

FIG. 3 shows a signal flow diagram for a combined pre-registration and resource preparation phase of a UE-initiated WiMAX to E-UTRAN handover in accordance with a first embodiment and the evolved 3GPP architecture shown in FIG. 2.

FIG. 4 shows a signal flow diagram for an execution phase of a UE-initiated WiMAX to E-UTRAN handover in accordance with the first embodiment shown in FIG. 3.

FIG. 5 shows a signal flow diagram for a pre-registration phase of a UE-initiated WiMAX to E-UTRAN handover in accordance with a second embodiment and the evolved 3GPP architecture shown in FIG. 2.

FIG. 6 shows a signal flow diagram for a resource preparation phase of a UE-initiated WiMAX to E-UTRAN handover in accordance with the second embodiment shown in FIG. 5.

FIG. 7 shows a signal flow diagram for an execution phase of a UE-initiated WiMAX to E-UTRAN handover in accordance with the second embodiment shown in FIGs. 5-6.

FIG. 8 shows a signal flow diagram for a pre-registration phase of a network-initiated WiMAX to E-UTRAN handover in accordance with a third embodiment and the evolved 3GPP architecture shown in FIG. 2.

FIG. 9 shows a signal flow diagram for a resource preparation phase of a network-initiated WiMAX to E-UTRAN handover in accordance with the third embodiment shown in FIG. 8.

FIG. 10 shows a signal flow diagram for an execution phase of a network-initiated WiMAX to E-UTRAN handover in accordance with the third embodiment shown in FIGs. 8-9.

### DETAILED DESCRIPTION

In order to reduce handover latency when a single-radio UE transfers from a non-3GPP RAT to a 3GPP RAT such as E-UTRAN, a 3GPP mobility management context (including a security context) for the UE that is valid for E-UTRAN access is created during a pre-registration phase that occurs before the UE hands over to the target E-UTRAN network. During a resource preparation phase, which also occurs before the UE hands over to the target E-UTRAN network, the mobility management context is transferred to a mobility management entity (MME) and transport resources (including air-interface resources) are reserved for the UE at the target E-UTRAN cell. When a handover is initiated by either the UE or the non-3GPP network, the time-consuming authentication and authorization procedures that are performed during the process of creating a 3GPP mobility management context can be skipped when the handover executes. Additionally, the transport resources have already been assigned to the UE and thus do not have to be set-up when the handover executes. After the handover is complete, a tracking area update procedure can be performed per standard 3GPP-to-3GPP inter-RAT handovers.

Mobility management context creation and resource preparation is supported by a Forward Attachment Function (FAF), which is a logical entity that can be located in an internet protocol (IP) server in an operator's IP network. Alternately, the FAF can be located (or co-located) anywhere in an evolved 3GPP architecture that supports secure source IP connectivity with the UE. As a further variant, an FAF's relay sub-element and the FAF's mobility management entity (MME) emulator sub-element can be distributed within the evolved 3GPP architecture.

Resource preparation is supported by a forward relocation request procedure between the FAF, an MME of the target E-UTRAN network, and a target E-UTRAN access (cell). The forward relocation request procedure transfers the MME context created by the FAF to the MME of the target E-TRAN network. The MME communicates with the target E-UTRAN cell to instruct it to reserve transport resources for the UE in anticipation of an imminent handover.

Three variants are described in this patent application. In the first variant, a UE triggers a combined pre-registration and resource preparation phase using a pre-attach request that includes information needed by the FAF to create an MME context and request resource preparation at a target 3GPP cell. This variant is useful when the UE seeks to trigger a handover right away. In the second variant, a UE initiates a pre-registration phase using a pre-attach request that contains information needed by the FAF to create an MME context but does not include information needed by the FAF to request resource preparation at the target 3GPP cell. Later, the UE transmits a second pre-attach request including information used to request resource preparation at the target 3GPP cell. In this second variant, an MME context for a particular UE can be prepared well in advance of a UE-initiated handover. In a third variant, the UE uses a pre-attach request to create an MME context, and the network triggers a resource preparation phase. Thus, the third variant provides a method for a network-initiated handover.

All three variants reduce handover latency when handing over from a non-3GPP access to a 3GPP access such as E-UTRAN. In advance of the handover, the FAF performs time-consuming authentication and authorization procedures and creates an MME context for the UE that is valid for E-UTRAN access. Prior to the handover, the FAF also directs transport resource (including air-interface resource) preparation for the UE at the target E-UTRAN access. Thus, when either a UE-initiated or a network-initiated handover occurs, the MME context and the resource preparation have already been completed and the handover latency is reduced.

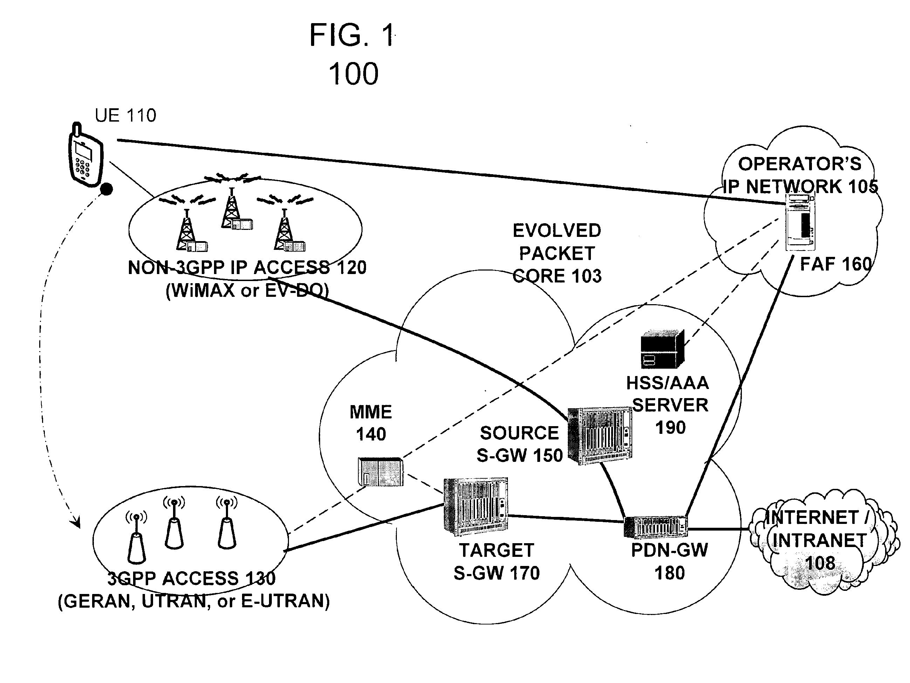

FIG. 1 shows an evolved 3GPP architecture 100 with a UE 110 handing over from a non-3GPP IP access 120 to a 3GPP access 130 in accordance with an embodiment. An evolved packet core 103 handles packet data communications and includes various serving gateways S-GW 150, 170, a packet data network gateway (PDN-GW) 180 to the Internet or an intranet 108 and/or an operator's IP network 105, and other entities such as a mobility management entity (MME) 140 and a Home Subscriber Server and Authentication, Authorization, and Accounting server (HSS/AAA) 190. In accordance with 3GPP convention, user plane logical interfaces are represented by solid lines and control plane (signaling) logical interfaces are represented by dashed lines. For the sake of clarity, other elements of an evolved 3GPP architecture, such as a Policy and Charging Rules Function (PCRF), a Serving GPRS Support Node (SGSN), and an evolved Packet Data Gateway (ePDG) are omitted.

While the UE 110 is using the non-3GPP IP access 120 to the evolved packet core 103, the UE 110 can have a connection to the Internet or an intranet 108 (or to an operator's IP network 105) through a source serving gateway (source S-GW) 150 and a packet data network gateway (PDN-GW) 180. In some scenarios (e.g., when the UE is using its home evolved packet core), the UE 110 can have a connection to the Internet or an intranet 108 (or to an operator's IP network 105) directly through a PDN-GW without the need for a source S-GW. When the UE completes the handover from the non-3GPP IP access 120 to the 3GPP access 130, the connection from the 3GPP access 130 to the Internet or an intranet 108 (or the operator's IP network 105) will be through a target S-GW 170 and the PDN-GW 180.

The MME 140 manages and stores an MME context for each UE within the 3GPP system. An MME context includes idle state UE/user identities, each UE's mobility state, and security parameters (also called security context). The MME also generates temporary identities (e.g., temporary mobile subscriber identities (TMSIs)) and allocates them to UEs. It checks whether the UE may camp on any particular tracking area (TA) and also authenticates the user.

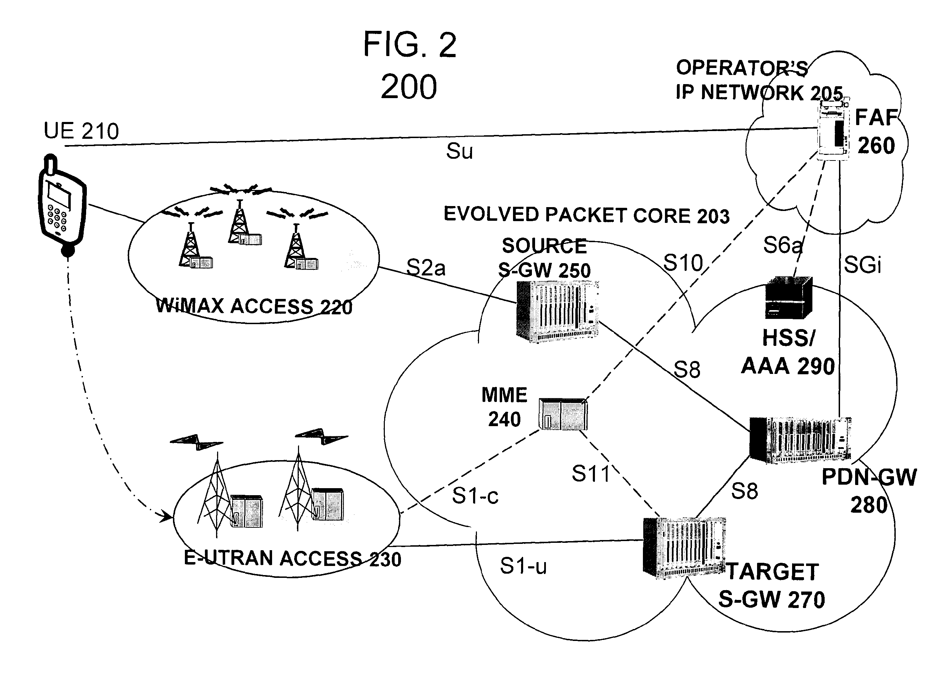

Authentication of a UE 110 takes place by using the HSS/AAA 190 of the UE's home network. (For the sake of clarity, FIG. 1 and FIG. 2 show a single evolved packet core which contains elements that can physically reside in a visited network and in a home network.) In accordance with an embodiment, information from the HSS/AAA 190 is used during a pre-registration phase of a handover from a non-3GPP IP access 120 to 3GPP access 130. During the pre-registration phase, a Forward Access Function (FAF) 160 logical entity creates an MME context for the UE 110 before the handover is executed. The FAF 160 is shown located in an IP server in the operator's IP network 105 but can be located (or co-located or distributed) anywhere in an evolved 3GPP architecture 100 that supports secure source IP connectivity with the UE 110.

FIG. 2 shows an evolved 3GPP architecture 200 with a UE 210 handing over from WiMAX access 220 to E-UTRAN access 230 in accordance with an embodiment. FIG. 2 is a specific implementation of FIG. 1 and shows signaling details specific to WiMAX and E-UTRAN. Other implementations could substitute other non-3GPP radio access, such as WiFi or EV-DO radio access, for the WiMAX access 220.

Similar to FIG. 1, an evolved packet core 203 handles packet data communications and includes a source S-GW 250 (used when the UE is located in a visited network) and a target S-GW 270. A PDN-GW 280 connects to the S-GWs 250, 270 and to an operator's IP network 205. (The connection from the PDN-GW 280 to the Internet or an intranet is omitted from FIG. 2 for the sake of simplification.) The MME 240 and HSS/AAA 290 remain in the evolved packet core 203 as vital entities within the evolved 3GPP network. As mentioned before, the evolved packet core shown in FIG. 2 includes elements that can physically reside in a visited network (e.g., source S-GW 250 and target S-GW 270) and in a home network (e.g., HSS/ AAA 290).

While the UE 210 is using the WiMAX access 220 to the evolved packet core 203, the UE 210 can have a connection to the operator's IP network 205 (or to the Internet or an intranet) through a standard S2a reference point to a source S-GW 250, which uses a S8 reference point to connect to the PDN-GW 280. A standard SGi reference point connects the PDN-GW 280 to the operator's IP network 205. When the UE completes the handover from the WiMAX access 220 to the E-UTRAN access 230, the connection from the E-UTRAN access 230 to the operator's IP network 205 (or the Internet or an intranet) will be through a standard S1-u reference point to the target S-GW 270, a standard S8 reference point from the target S-GW 270 to the PDN-GW 280, and an SGi reference point from the PDN-GW 280 to the operator's IP network 205.

The MME 240 is interconnected within the evolved 3GPP architecture 200 in a standard manner through an S1-c reference point to the E-UTRAN access 230, an S11 reference point to the target S-GW 270, and an S10 reference point to the operator's IP network 205. The HSS/AAA 290 has an S6a reference point to the operator's IP network 205.

The FAF 260 is in communication with the UE 210 through an Su reference point. This Su reference point supports a secure source IP connection and can be implemented based on the standard Ut reference point which is specified in 3GPP TS 23.002.

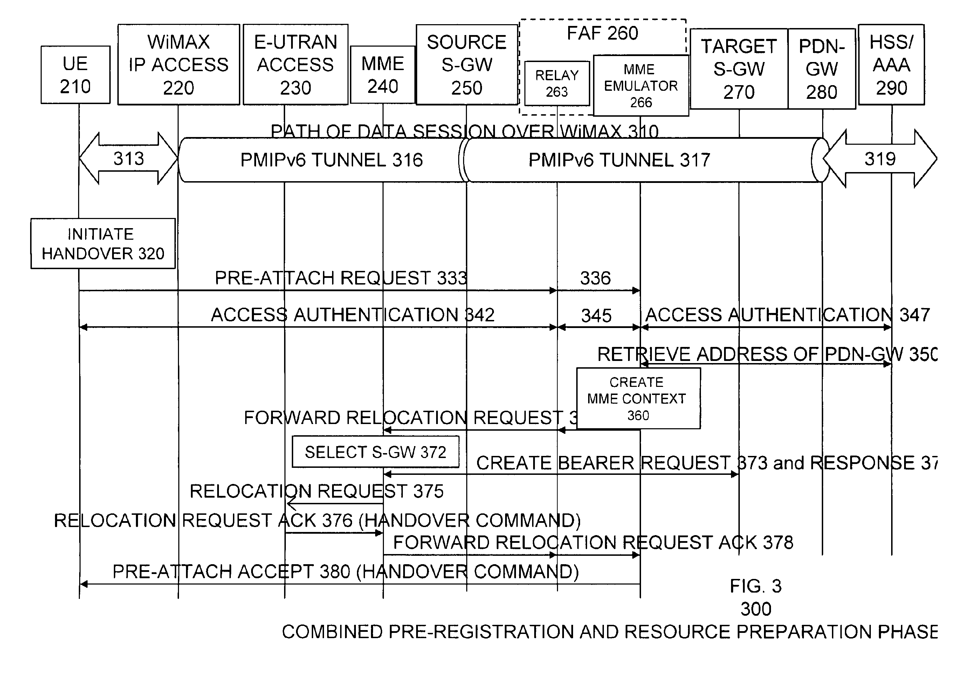

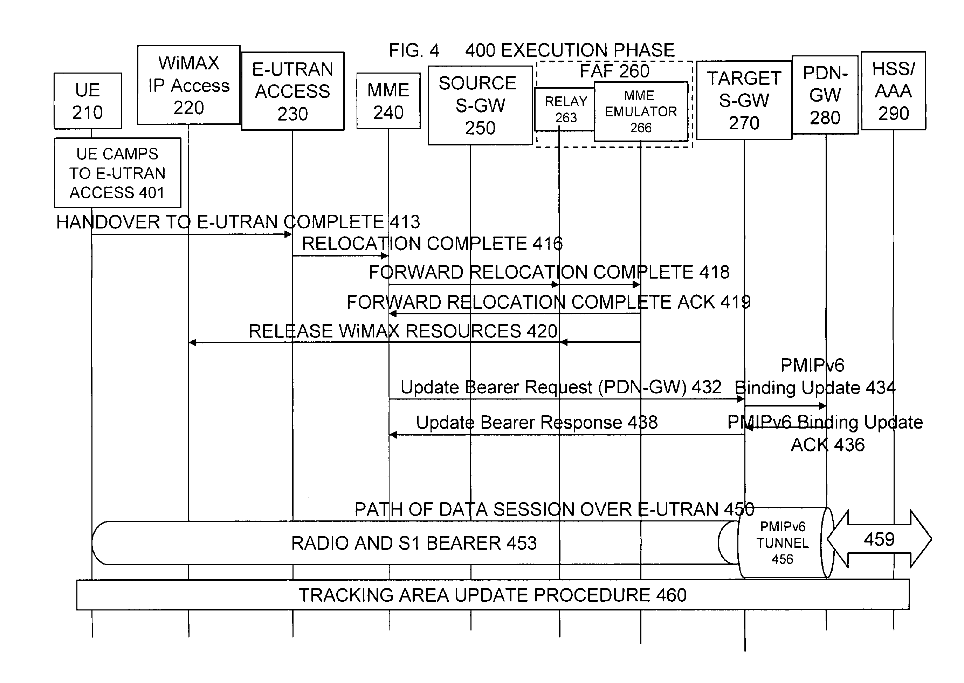

FIG. 3 shows a signal flow diagram for a combined pre-registration and resource preparation phase 300 of a UE-initiated WiMAX to E-UTRAN handover in accordance with the embodiment shown in FIG. 2. In this embodiment, a handover is implemented in two phases. In a first phase shown in FIG. 3, a combined pre-registration and resource preparation phase prepares an MME context for UE currently connected through a WiMAX IP access, transfers the MME context to an MME, and reserves transport resources (including air interface resources) at a target E-UTRAN access. In a second phase shown in FIG. 4, the UE camps to the target E-UTRAN access and the WiMAX data session path is transferred to an E-UTRAN data session path.

Although WiMAX is specifically shown, the principles described can be applied to other non-3GPP radio access such as WiFi and EV-DO. Each of the entities in FIG. 2 is shown as a logical element in FIG. 3 with the same reference numbers. As shown in this embodiment, the FAF 260 includes two sub-elements: a relay 263 and an MME emulator 266. The relay 263 transfers messages to and from the MME emulator 266 during the preparation phase. The MME emulator 266 creates a 3GPP mobility management context that is valid for E-UTRAN access for a UE that is not connected to a target E-UTRAN access 230. Also shown in this embodiment, the relay 263 and the MME emulator 266 are co-located within an FAF 260 that may be either within an operator's IP network or outside an operator's IP network. In an alternate embodiment, the MME emulator 266 may be incorporated into the MME 240 such that the sub-elements of the FAF 260 are distributed within both an operator's IP network 205 and an evolved packet core 203.

It is assumed that while the UE 210 is being served by the non-3GPP IP access, a first Proxy Mobile IPv6 (PMIPv6) tunnel is established between the non-3GPP access network and the source S-GW, and a second PMIPv6 tunnel is established between the source S-GW and the PDN-GW in the evolved packet core 203 (FIG. 2). If the source S-GW is not required (e.g., when the UE is not roaming) only one PMIPv6 tunnel is needed to communicate between the WiMAX IP Access 220 and the PDN-GW 280.

A data session over WiMAX 310 uses a data path having a radio access 313 from the UE 210 to the WiMAX IP access 220. The WiMAX IP access 220 uses a PMIPv6 tunnel 316 to communicate with a source S-GW 250 and the source S-GW 250 uses another PMIPv6 tunnel 317 to communicate with a PDN-GW 280 which then uses an IP connection 319 (over the standard SGi reference point) to an operator's IP network 205 (shown in FIG. 2) or the Internet or an intranet 108 (shown in FIG. 1). Thus, the UE 210 is using a non-3GPP access system and is being served by PDN-GW 280 and source S-GW 250. As mentioned before, in some non-roaming scenarios the use of a source S-GW is not required.

When the UE 210 discovers the E-UTRAN access 230, it may initiate 320 a handover to that E-UTRAN access (cell) using a combined pre-registration and resource preparation phase. An IP address of the relay 263 of the FAF 260 may be pre-configured within the UE 210 by a network operator or the relay 263 may be discovered by the UE 210 within an operator's IP network 205 (FIG. 2) using the Dynamic Host Configuration Protocol (DHCP) or other discovery mechanisms. The combined pre-registration and resource preparation phase 300 starts with a pre-attach request message 333 sent from the UE 210 through the WiMAX IP access 220 to the relay 263 of the FAF 260 over the user plane (i.e., over the Su reference point). The pre-attach request message 333 includes some of the information required by the MME emulator 266 of the FAF 260 to build an MME context for the UE 210. The information may include an International Mobile Subscriber Identity (IMSI), IP address, and/or Access Point Name (APN). The pre-attach request message also includes a Target E-UTRAN Cell ID and Bearer Context Information indicating the current active IP bearers of the UE 210. The Bearer Context Information includes parameters identifying the properties (e.g., QoS settings) of the current communication bearers used by the UE 210. The identity of the target E-UTRAN cell serves as an indication to the FAF 260 that the UE wants to hand over to the E-UTRAN network.

When the pre-attach request message 333 is received, the relay 263 forwards the pre-attach request message 336 to the MME emulator 266. Note that the MME emulator 266 will be building a 3GPP mobility management context for E-UTRAN access. This context is not required by the non-3GPP IP access 220 but will be required by the E-UTRAN access 230 when the handover is executed.

Next, the MME emulator 266 of the FAF 260 contacts the HSS/AAA 290 and authenticates 342, 345, 347 the UE 210. After successful authentication, the MME emulator 266 retrieves 350 the address of the PDN-GW 280 that is currently serving the UE 210 and creates 360 an MME context for the UE 210. MME context includes information provided by the UE 210 in the pre-attach request message 333 (e.g., IMSI, IP address, APN, Target E-UTRAN Cell ID, and/or Bearer Context Information) as well as a security context (e.g., security information from the HSS/AAA 290 and security keys/algorithms pertaining to the UE 210) and perhaps some pre-configured values such as sequence numbers. The MME emulator 266, however, does not perform a Location Update procedure (which would otherwise be performed by a standard MME in the case where the UE attaches to an Evolved Packet Core 203 through E-UTRAN). As a consequence, the UE 210 is not reachable over the E-UTRAN access 230 while it is still using the non-3GPP access 220.

Next, the MME emulator 266 initiates resource preparation in the target E-UTRAN cell by sending a forward relocation request 370 to transfer the MME context through the relay 263 to the MME 240 of the target E-UTRAN network. The address of the MME 240 is resolved from the Target E-UTRAN Cell ID. The MME context from the FAF 260 contains all the context information normally returned by a standard MME, such as security keys/algorithms, UE capabilities, bearer context information, and address of the PDN-GW 280. The MME 240 selects 372 a new serving gateway and sends a create bearer request 373 to this target S-GW 270. The create bearer request includes the Bearer Context Information, the PDN-GW 280 address, and TEIDs (Tunnel Endpoint Identifiers) for uplink traffic. The target S-GW allocates the address and one TEID per bearer for the uplink traffic on the S1-u reference point shown in FIG. 2 and sends a Create Bearer Response 374 back to the MME 240 including the S-GW addresses and uplink TEIDs for the user plane.

In addition, the MME 240 sends a relocation request 375 to the E-UTRAN access 230 specified by the Target E-UTRAN Cell ID information from the pre-attach request message 333. The relocation request 375 includes the S-GW addresses and uplink TEIDs for the user plane previously received in the Create Bearer Response 374. The relocation request 375 creates a UE context at the target E-UTRAN access (cell) including information about the bearers and the security context. The UE context contains information about the UE needed by a serving E-UTRAN cell and can be considered a subset of information from the MME context. The E-UTRAN access 230 responds with a relocation request acknowledgement 376 to the MME 240 including the address and TEIDs allocated at the target E-UTRAN access (cell) for downlink traffic on the S1-u reference point (one TEID per bearer) as well as a handover command for the UE 210. In response, the MME 240 sends a forward relocation request acknowledgement 378 to the MME emulator 266 through the relay 263.

When the FAF 260 receives the forward relocation request acknowledgement 378, it allocates a Tracking Area Identity (TAI), a S-Temporary Mobile Subscriber Identity (S-TMSI), and an S-TMSI-Signature (used for identification checking purposes) for the UE 210 and sends a pre-attach accept message 380 that includes this information and the handover command issued by the target E-UTRAN access 230 from the relocation request acknowledgement 376. This pre-attach accept message 380 serves as a command for the UE 210 to perform the requested handover. At this point, the combined pre-registration and resource preparation phase is completed and the handover is imminent. The execution phase starts when the UE leaves the currently-used WiMAX IP access 220 system and camps to the target E-UTRAN access 230 (cell) indicated by the Target E-UTRAN Cell ID information sent earlier in the pre-attach request message 333.

FIG. 4 shows a signal flow diagram for an execution phase 400 of a UE-initiated WiMAX to E-UTRAN handover in accordance with the embodiment shown in FIG. 2 and FIG. 3. When the UE camps 401 and has access to the target E-UTRAN access 230 (cell), it sends a Handover to E-UTRAN Complete message 413 to the E-UTRAN access 230. Note that transport resources (including air-interface resources) have already been prepared for the UE 210 at the E-UTRAN access 230. The E-UTRAN access 230 informs the MME 240 by sending a relocation complete message 416. In response, the MME 240 informs the FAF 260 by sending a forward relocation complete message 418, which is normally acknowledged by a forward relocation complete acknowledgement 419.

At this point, the UE 210 has successfully been handed over to the E-UTRAN network and the MME emulator 266 transmits instructions through the relay 263 to the WiMAX IP access 220 to release 420 the WiMAX resources previously allocated to the UE 210. Although release 420 message is shown as a direct message from the FAF 260 to the WiMAX IP access 220, it could be sent indirectly via a Release Resources message directed to the PDN-GW 280, which is then relayed by the PDN-GW 280 to the WiMAX IP Access 220.

Meanwhile, the MME 240 informs the target S-GW 270 that the MME 240 is responsible for all the bearers the UE 210 has established and sends an Update Bearer Request message 432 to the target S-GW 270. The message 432 includes the IP address of the PDN-GW 280 that was previously retrieved 350 from the HSS/AAA 290 as shown in FIG. 3. Based on the Update Bearer Request message 432 from the MME 240, the target S-GW 270 initiates a PMIPv6 registration procedure towards the PDN-GW 280 by sending a PMIPv6 Proxy Binding Update 434 according to Proxy MIPv6 IETF draft specification (draft-ietf-netlm-m-proxymip6). The PDN-GW 280 responds with a PMIPv6 Proxy Binding Update acknowledgement 436 and updates its mobility binding, which effectively switches the PMIPv6 tunnels 316, 317 (FIG. 3) to have end points between the PDN-GW 280 and the target S-GW 270. In the PMIPv6 Proxy Binding Update acknowledgement 436, the PDN-GW 280 responds with the same IP address or prefix that was assigned to the UE 210 earlier (when the UE was allocated an IP address for access through the non-3GPP network). A PMIPv6 tunnel 456 now exists between the PDN-GW 280 and the target S-GW 270. Note that the PMIPv6 protocol described is merely an example. GPRS Tunneling Protocol (GTP) as specified in 3GPP US 23.401 could alternately be used to update the mobility binding at the PDN-GW 280.

The target S-GW 270 returns an Update Bearer Response message 438 to the MME 240 as specified in 3GPP TS 23.401 Section 5.3.3. This message includes the IP address of the UE 210 and serves as an indication to the MME 240 that the binding has been successful. Now, the UE 210 can resume data communication over a path of a data session over E-UTRAN 450. The path includes a radio and S1 bearer connection 453 between the UE 210 and the target S-GW 270, the PMIPv6 tunnel 456 between the target S-GW 270 and the PDN-GW 280, and an IP connection 459 to an operator's IP network 205 (shown in FIG. 2) or the Internet or an intranet 108 (shown in FIG. 1). Next, the UE 210 performs a Tracking Area update procedure 460 according to 3GPP TS 23.401 Section 5.3.3 to update the Home Subscriber Server (HSS/AAA 290) with the identity of the MME 240 currently serving the UE 210.

FIGs. 3-4 show a situation where the pre-attach request message 333 serves also to initiate a handover (because it includes a Target E-UTRAN Cell ID). As an alternative, the UE 210 may first pre-attach and later request to handover. Thus, the second embodiment has three distinct phases. First, a UE using a non-3GPP access pre-registers with an FAF. Next, the UE initiates handover with a resource preparation phase at the target E-UTRAN access cell. And finally, the handover executes in a third phase.

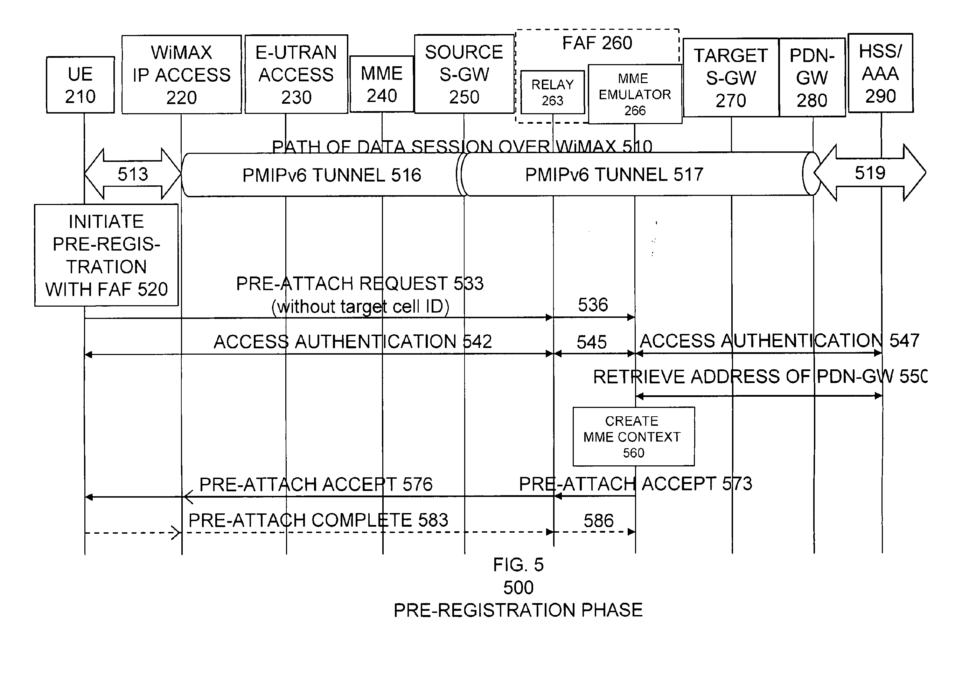

FIG. 5 shows a signal flow diagram for a pre-registration phase 500 of a UE-initiated WiMAX to E-UTRAN handover in accordance with the embodiment shown in FIG. 2. FIG. 5 shows a pre-registration phase similar to the preparation phase shown in FIG. 3 of EPC patent application 07386015.7 filed on June 18, 2007 by Motorola, Inc. and entitled "Non-3GPP Access to E-UTRAN Access Inter-RAT Handover." This embodiment also has similarities with the embodiment shown in FIGs. 3-4, except that the pre-attach request message 533 does not include a Target E-UTRAN Cell ID and thus steps 370, 372, 373, 374, 375, 376, 378 (from FIG. 3) do not take place. Also, the pre-attach accept message 573 will not contain a handover command (cf. pre-attach accept message 380 shown in FIG. 3).

Like FIGs. 3-4, WiMAX is shown merely as an example of a non-3GPP radio access and the entities in FIG. 2 are shown as logical elements in FIG. 5 with the same reference numbers. Again it is assumed that while the UE 210 is being served by the non-3GPP IP access, a data session over WiMAX 510 uses a data path having a radio access 513 from the UE 210 to the WiMAX IP access 220. A first Proxy Mobile IPv6 (PMIPv6) tunnel 516 is established between the non-3GPP access 220 and the source S-GW 250, and a second PMIPv6 tunnel 517 is established between the source S-GW 250 and the PDN-GW 280 in the evolved packet core 203 (FIG. 2). An IP connection 519 completes the data session to an operator's IP network 205 (shown in FIG. 2) or the Internet or an intranet 108 (shown in FIG. 1). As mentioned before, in some non-roaming scenarios the use of a source S-GW is not required.

When the UE 210 discovers the E-UTRAN access 230, it may initiate 520 pre-registration with the FAF 260 over the user plane (i.e., over the Su reference point). An IP address of the relay 263 of the FAF 260 may be pre-configured within the UE 210 by a network operator or the relay 263 may be discovered by the UE 210 within an operator's IP network 205 (FIG. 2) using DHCP or any other available discovery mechanism. The pre-registration starts with a pre-attach request message 533 sent from the UE 210 through the WiMAX IP access 220 to the relay 263 of the FAF 260. The pre-attach request message 533 includes some of the information required by the MME emulator 266 of the FAF 260 to build an MME context for the UE 210, but it does not include a Target E-UTRAN Cell ID. The information may include an International Mobile Subscriber Identity (IMSI), IP address, Access Point Name (APN), and/or Bearer Context Information of the UE 210. The Bearer Context Information includes parameters identifying the properties (e.g., QoS settings) of the current communication bearers used by the UE 210. Because the pre-attach request message 533 omits the identity of a target E-UTRAN cell, the FAF knows that the UE does not necessarily want to hand over to the E-UTRAN network right away.

When the pre-attach request message 533 is received, the relay 263 forwards the pre-attach request message 536 to the MME emulator 266. Note that the MME emulator 266 will be building a 3GPP mobility management context for E-UTRAN access. This context is not required by the non-3GPP IP access 220 but will be required by the E-UTRAN access 230 when the handover is executed.

The MME emulator 266 of the FAF 260 contacts the HSS/AAA 290 and authenticates 542, 545, 547 the UE 210. After successful authentication, the MME emulator 266 retrieves 550 the address of the PDN-GW 280 that is currently serving the UE 210 and creates 560 an MME context for the UE 210. MME context includes information provided by the UE 210 in the pre-attach request message 533 (e.g., IMSI, IP address, APN, and/or Bearer Context Information) as well as a security context (e.g., security information from the HSS/AAA 290 and security keys/algorithms pertaining to the UE 210) and perhaps some pre-configured values such as sequence numbers. The MME emulator 266, however, does not perform a Location Update procedure (which would otherwise be performed by a standard MME in the case where the UE attaches to an Evolved Packet Core 203 through E-UTRAN). As a consequence, the UE 210 is not reachable over the E-UTRAN access 230 while it is still using the non-3GPP access 220.

Next, the MME emulator 266 allocates a Tracking Area Identity (TAI), a S-Temporary Mobile Subscriber Identity (S-TMSI), and an S-TMSI-Signature (used for identification checking purposes) for the UE 210 and sends a pre-attach accept message 573 to the relay 263. The relay forwards the message as a pre-attach accept message 576 through the WiMAX IP access 220 to the UE 210. Optionally, the UE 210 can respond with a pre-attach complete message 583, 586. At this point, an MME context is created but it needs Target E-UTRAN Cell ID information before it can be forwarded to the MME 240 for resource preparation at the target E-UTRAN cell. After the pre-registration phase is complete, when the UE wants to hand over to E-UTRAN, it sends another pre-attach request with a Target E-UTRAN Cell ID included.

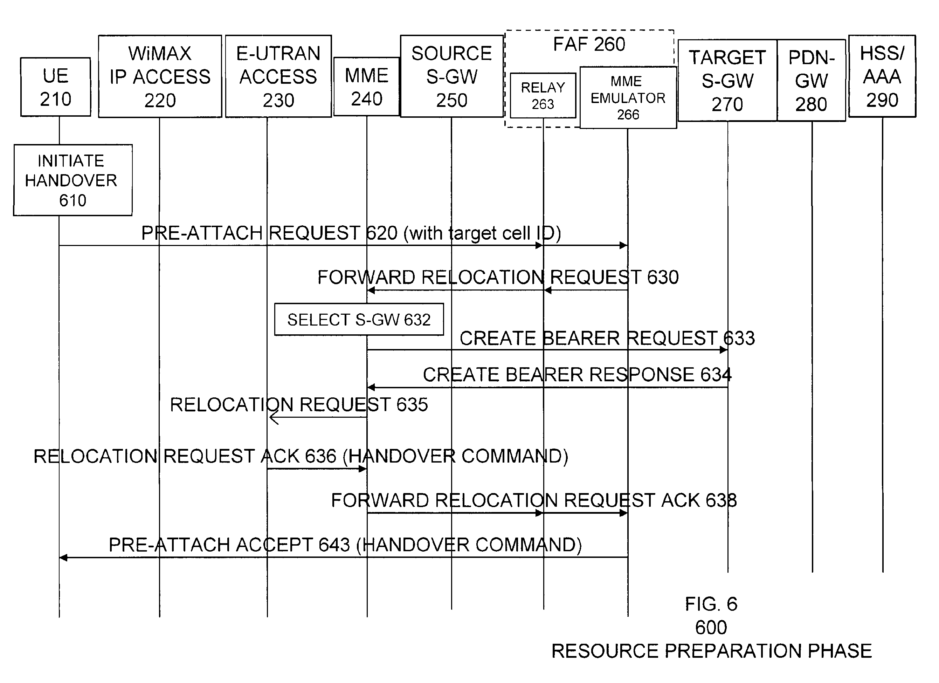

FIG. 6 shows a signal flow diagram for a resource preparation phase 600 of a UE-initiated WiMAX to E-UTRAN handover in accordance with the embodiment shown in FIG. 2 and FIG. 5. At a later time, the UE 210 can initiate 610 a handover after pre-registration (shown in FIG. 5) by transmitting a second pre-attach request message 620 that includes the previously-omitted Target E-UTRAN Cell ID. Additionally, bearer context information can be updated via the second pre-attach request message 620. At this point, analogies to the previously omitted signal flows (e.g., 370, 372, 373, 374, 375, 376, 378 from FIG. 3) are executed.

When the UE 210 decides to initiate 610 a handover to a target E-UTRAN access cell, it sends a second pre-attach request message 620 to the FAF 260 including at least a Target E-UTRAN Cell ID. Optionally, it can include updated Bearer Context Information. Next, the MME emulator 266 initiates resource preparation in the target E-UTRAN cell by sending a forward relocation request 632 to transfer the MME context to the MME 240 of the target E-UTRAN network. The address of the MME 240 is resolved from the Target E-UTRAN Cell ID. The MME context from the FAF 260 contains all the context information normally returned by a standard MME, such as security keys/algorithms, UE capabilities, bearer information, and address of the PDN-GW 280. The MME 240 selects 632 a new serving gateway and sends a create bearer request 633 to this target S-GW 270. The create bearer request includes the Bearer Context Information, the PDN-GW 280 address, and TEIDs for uplink traffic. The target S-GW allocates the address and one TEID per bearer for the uplink traffic on the S1-u reference point shown in FIG. 2 and sends a Create Bearer Response 634 back to the MME 240 including the S-GW addresses and uplink TEIDs for the user plane.

In addition, the MME 240 sends a relocation request 635 to the E-UTRAN access 230 specified by the Target E-UTRAN Cell ID information from the pre-attach request message 333. The relocation request 375 includes the S-GW addresses and uplink TEIDs for the user plane previously received in the Create Bearer Response 634. The relocation request 635 creates a UE context at the target E-UTRAN access 230 (cell) including information about the bearers and the security context. The UE context contains information about the UE needed by a serving E-UTRAN cell and can be considered a subset of information from the MME context. The E-UTRAN access 230 responds with a relocation request acknowledgement 636 to the MME 240 including the address and TEIDs allocated at the target E-UTRAN access (cell) for downlink traffic on the S1-u reference point (one TEID per bearer) as well as a handover command for the UE 210. In response, the MME 240 sends a forward relocation request acknowledgement 638 to the MME emulator 266 through the relay 263.

When the FAF 260 receives the forward relocation request acknowledgement 638, it allocates (if not already done so) a Tracking Area Identity (TAI), a S-Temporary Mobile Subscriber Identity (S-TMSI), and an S-TMSI-Signature (used for identification checking purposes) for the UE 210 and sends a second pre-attach accept message 643 that includes this information and the handover command issued by the target E-UTRAN access 230 from the relocation request acknowledgement 636. This second pre-attach accept message 643 serves as a command for the UE 210 to perform the requested handover. At this point, the resource preparation phase is completed and the handover is imminent. The execution phase starts when the UE leaves the currently-used WiMAX IP access 220 system and camps to the target E-UTRAN access 230 (cell) indicated by the Target E-UTRAN Cell ID information sent earlier in the second pre-attach request message 620.

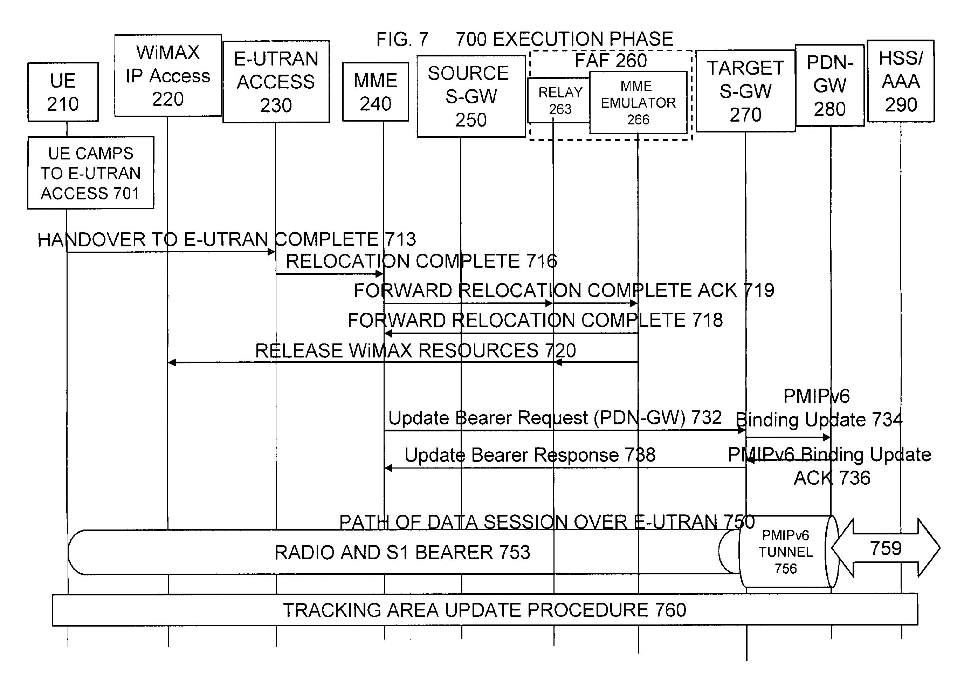

FIG. 7 shows a signal flow diagram for an execution phase 700 of a UE-initiated WiMAX to E-UTRAN handover in accordance with the second embodiment shown in FIGs. 5-6. The signal flow shown in FIG. 7 is extremely similar to the signal flow shown in FIG. 4. When the UE camps 701 and has access to the target E-UTRAN access 230 (cell) previously indicated by the Target E-UTRAN cell ID information sent in the second pre-attach request message 620 (FIG. 6), it sends a Handover to E-UTRAN Complete message 713 to the E-UTRAN access 230. Note that transport resources (including air-interface resources) have already been prepared for the UE 210 at the E-UTRAN access 230. The E-UTRAN access 230 informs the MME 240 by sending a relocation complete message 716. In response, the MME 240 informs the FAF 260 by sending a forward relocation complete message 718, which is normally acknowledged by a forward relocation complete acknowledgement 719.

At this point, the UE 210 has successfully been handed over to the E-UTRAN network and the MME emulator 266 transmits instructions through the relay 263 to the WiMAX IP access 220 to release 720 the WiMAX resources previously allocated to the UE 210. Although release 720 message is shown as a direct message from the FAF 260 to the WiMAX IP access 220, it could be sent indirectly via a Release Resources message directed toward the PDN-GW 280, which is then relayed by the PDN-GW 280 to the WiMAX IP Access 220.

Meanwhile, the MME 240 informs the target S-GW 270 that the MME 240 is responsible for all the bearers the UE 210 has established and sends an Update Bearer Request message 732 to the target S-GW 270. The message 732 includes the IP address of the PDN-GW 280 that was previously retrieved 550 from the HSS/AAA 290 as shown in FIG. 5. Based on the Update Bearer Request message 732 from the MME 240, the target S-GW 270 initiates a PMIPv6 registration procedure towards the PDN-GW 280 by sending a PMIPv6 Proxy Binding Update 734 according to Proxy MIPv6 IETF draft specification (draft-ietf-netlmm-proxymip6). The PDN-GW 280 responds with a PMIPv6 Proxy Binding Update acknowledgement 736 and updates its mobility binding, which effectively switches the PMIPv6 tunnels 516, 517 (FIG. 5) to have end points between the PDN-GW 280 and the target S-GW 270. In the PMIPv6 Proxy Binding Update acknowledgement 736, the PDN-GW 280 responds with the same IP address or prefix that was assigned to the UE 210 earlier (when the UE was allocated an IP address for access through the non-3GPP network). A PMIPv6 tunnel 756 now exists between the PDN-GW 280 and the target S-GW 270. As mentioned previously, the PMIPv6 protocol described is merely an example. GPRS Tunneling Protocol (GTP) as specified in 3GPP US 23.401 could alternately be used to update the mobility binding at the PDN-GW 280.

The target S-GW 270 returns an Update Default Bearer Response message 738 to the MME 240 as specified in 3GPP TS 23.401 Section 5.3.3. This message includes the IP address of the UE 210 and serves as an indication to the MME 240 that the binding has been successful. Now, the UE 210 can resume data communication over a path of a data session over E-UTRAN 750. The path includes a radio and S1 bearer connection 753 between the UE 210 and the target S-GW 270, the PMIPv6 tunnel 756 between the target S-GW 270 and the PDN-GW 280, and an IP connection 759 to an operator's IP network 205 (shown in FIG. 2) or the Internet or an intranet 108 (shown in FIG. 1). Next, the UE 210 performs a Tracking Area update procedure 760 according to 3GPP TS 23.401 Section 5.3.3 to update the Home Subscriber Server (HSS/AAA 290) with the identity of the MME 240 currently serving the UE 210.

The first embodiment shown in FIGs. 3-4 and the second embodiment shown in FIGs. 5-7 provide details and signal flow diagrams supporting two types of UE-initiated handover. A third embodiment supports a network-initiated handover. In this third embodiment, the handover decision as well as the handover initiation is made by the network.

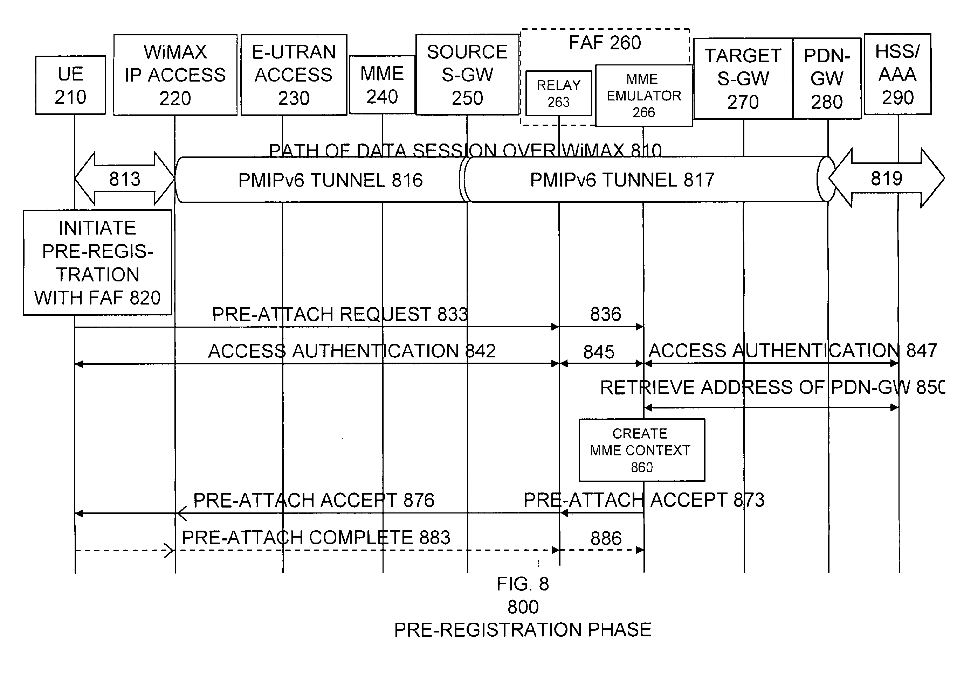

FIG. 8 shows a signal flow diagram for a pre-registration phase of a network-initiated WiMAX to E-UTRAN handover in accordance with a third embodiment and the evolved 3GPP architecture shown in FIG. 2. FIG. 8 shows a pre-registration phase similar to the preparation phase shown in FIG. 3 of EPC patent application 07386015.7 filed on June 18, 2007 by Motorola, Inc. and entitled "Non-3GPP Access to E-UTRAN Access Inter-RAT Handover." Also, the pre-registration phase shown in FIG. 8 is very similar to the pre-registration phase shown in FIG. 5.

As mentioned previously, although WiMAX is specifically shown, the principles described can be applied to other non-3GPP radio access such as WiFi and EV-DO. In this embodiment, the UE 210 is being served by the non-3GPP IP access over a radio access 813 and a first Proxy Mobile IPv6 (PMIPv6) tunnel 816 is established between the non-3GPP access network and the source S-GW, and a second PMIPv6 tunnel 817 is established between the source S-GW and the PDN-GW in the evolved packet core 203 (FIG. 2). An IP connection 819 over the standard SGi reference point completes the data session to an operator's IP network 205 (shown in FIG. 2) or the Internet or an intranet 108 (shown in FIG. 1).

When the UE 210 discovers the E-UTRAN access 230, it may initiate 820 pre-registration with the FAF 260 over the user plane (i.e. over the Su reference point). An IP address of the relay 263 of the FAF 260 may be pre-configured within the UE 210 by a network operator or the relay 263 may be discovered by the UE 210 within an operator's IP network 205 (FIG. 2) using DHCP or any other available discovery mechanism. The pre-registration starts with a pre-attach request message 833 sent from the UE 210 through the WiMAX IP access 220 to the relay 263 of the FAF 260. The pre-attach request message 833 includes some of the information required by the MME emulator 266 of the FAF 260 to build an MME context for the UE 210, but it does not include a Target E-UTRAN Cell ID. The information may include an International Mobile Subscriber Identity (IMSI), IP address, Access Point Name (APN), and/or Bearer Context Information indicating the current active IP bearers of the UE 210. The Bearer Context Information includes parameters identifying the properties (e.g., QoS settings) of the current communication bearers used by the UE 210. Because the pre-attach request message 833 omits the identity of a target E-UTRAN cell, the FAF knows that the UE does not necessarily want to hand over to the E-UTRAN network right away.

When the pre-attach request message 833 is received, the relay 263 forwards the pre-attach request message 836 to the MME emulator 266. Note that the MME emulator 266 will be building a 3GPP mobility management context for E-UTRAN access. This context is not required by the non-3GPP IP access 220 but will be required by the E-UTRAN access 230 when the handover is executed.

Next, the MME emulator 266 of the FAF 260 contacts the HSS/AAA 290 and authenticates 842, 845, 847 the UE 210. After successful authentication, the MME emulator 266 retrieves 850 the address of the PDN-GW 280 that is currently serving the UE 210 and creates 860 an MME context for the UE 210. MME context includes information provided by the UE 210 in the pre-attach request message 833 (e.g., IMSI, IP address, APN, and/or Bearer Context Information) as well as a security context (e.g., security information from the HSS/AAA 290 and security keys/algorithms pertaining to the UE 210) and perhaps some pre-configured values such as sequence numbers. The MME emulator 266, however, does not perform a Location Update procedure. As a consequence, the UE 210 is not reachable over the E-UTRAN access 230 while it is still using the non-3GPP access 220.

Next, the FAF 260 allocates a Tracking Area Identity (TAI), a S-Temporary Mobile Subscriber Identity (S-TMSI), and an S-TMSI-Signature (used for identification checking purposes) for the UE 210 and next sends a pre-attach accept message 873, 876 to the UE 210 through the WiMAX IP access 220. Optionally, the UE 210 may respond to the relayed pre-attach accept message 876 with a pre-attach complete message 883, 886. At this point, an MME context is created but it needs Target E-UTRAN Cell ID information before it can be forwarded to the MME 240 for resource preparation at the target E-UTRAN cell. After the pre-registration phase 800 is complete, when the non-3GPP network wants to hand over to E-UTRAN, it sends relocation required message with a Target E-UTRAN Cell ID included.

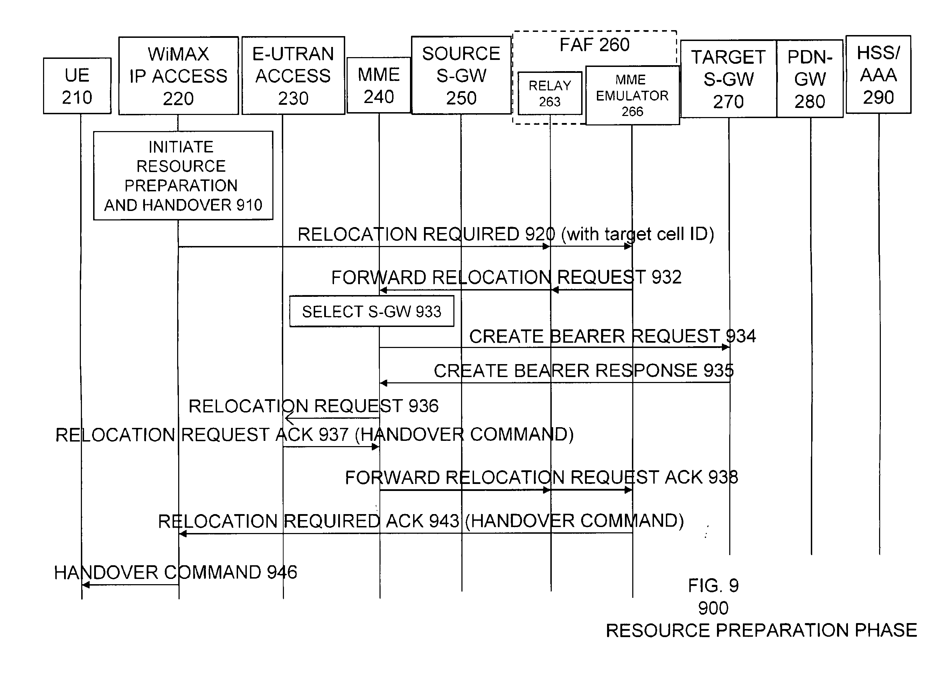

FIG. 9 shows a signal flow diagram for a resource preparation phase of a network-initiated WiMAX to E-UTRAN handover in accordance with the third embodiment shown in FIG. 8. The WiMAX network can initiate a handover to the E-UTRAN network by transmitting a relocation required message 920 including a Target E-UTRAN Cell ID to the MME emulator 266. Optionally, the relocation required message 920 can include Bearer Context Information. The non-3GPP network's decision to hand over may be based on E-UTRAN measurement reports send by the UE 210 as well as alternate or substitute parameters.

The MME emulator 266 initiates resource preparation n the target E-UTRAN access cell by sending a forward relocation request 932 to transfer the MME context (previously created in step 860 shown in FIG. 8) to the MME 240. The address of the MME 240 is resolved from the Target E-UTRAN Cell ID. The MME 240 selects 933 a target serving gateway and sends a Create Bearer Request 934 including Bearer Context Information, the PDN-GW address, and TEIDs for uplink traffic) to the target S-GW 270. The target S-GW 270 allocates the addresses and TEIDs for the uplink traffic on the S1-u reference point (one TEID per bearer) and sends back to the MME 240 a Create Bearer Response 935 including the S-GW addresses and uplink TEIDs for the user plane.

In addition, the MME 240 sends a relocation request 936 to the E-UTRAN access 230 target cell including the S-GW addresses and uplink TEIDs for the user plane previously received in the Create Bearer Response 935. This relocation request 936 creates the UE context. The UE context contains information about the UE needed by a serving E-UTRAN cell and can be considered a subset of information from the MME context. The E-UTRAN access 230 responds with a relocation request acknowledgement 937 to the MME 240 including the address and TEIDs allocated at the target E-UTRAN access (cell) for downlink traffic on the S1-u reference point (one TEID per bearer) as well as a handover command for the UE 210. In response, the MME 240 sends a forward relocation request acknowledgement 938 to the MME emulator 266 through the relay 263.

When the FAF 260 receives the forward relocation request acknowledgement 938, it sends a relocation required acknowledgement 943 that includes the handover command issued by the target E-UTRAN access 230 from the relocation request acknowledgement 937. The WiMAX IP access 220 relays the handover command 946 to the UE 210. At this point, the resource preparation phase is completed and the handover is imminent. The execution phase starts when the UE leaves the currently-used WiMAX IP access 220 system and camps to the target E-UTRAN access 230 (cell) indicated by the Target E-UTRAN Cell ID information sent in the handover command 946.

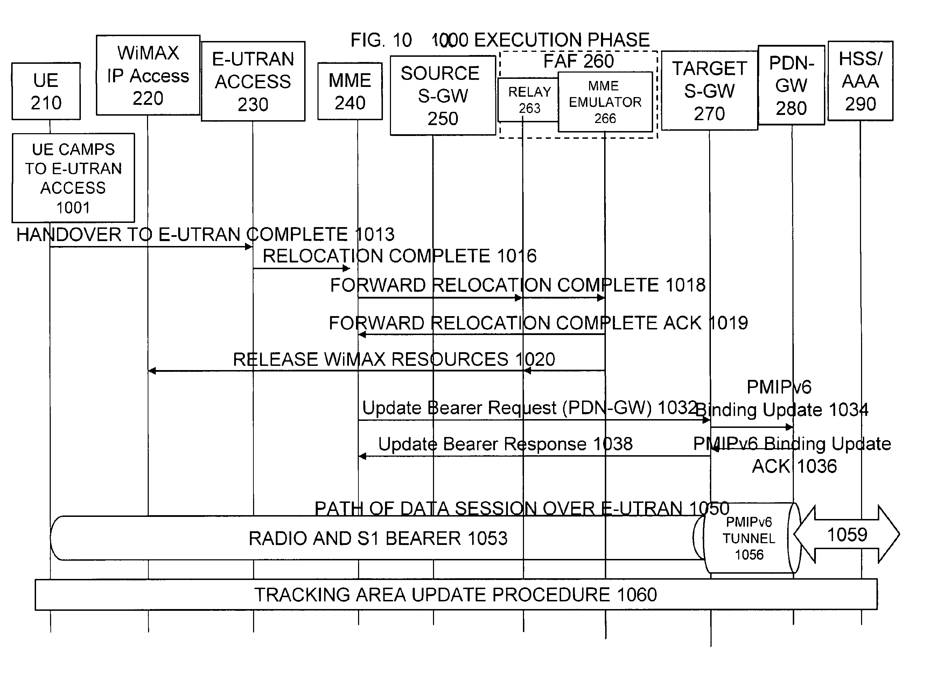

FIG. 10 shows a signal flow diagram for an execution phase of a network-initiated WiMAX to E-UTRAN handover in accordance with the third embodiment shown FIGs. 8-9. The signal flow shown in FIG. 10 is also extremely similar to the signal flow shown in FIG. 4. In response to the network-initiated handover command 946 (shown in FIG. 9), the UE 210 leaves the currently-used WiMAX IP access 220 and camps to the target E-UTRAN access 230 indicated in the handover command 946.

When the UE camps 1001 and has access to the target E-UTRAN access 230 (cell), it sends a Handover to E-UTRAN Complete message 1013 to the E-UTRAN access 230. Note that transport resource (including air-interface resources) have already been prepared for the UE 210 at the E-UTRAN access 230. The E-UTRAN access 230 informs the MME 240 by sending a relocation complete message 1016. In response, the MME 240 informs the FAF 260 by sending a forward relocation complete message 1018, which is normally acknowledged by a forward relocation complete acknowledgement 1019.

At this point, the UE 210 has successfully been handed over to the E-UTRAN network and the MME emulator 266 transmits instructions through the relay 263 to the WiMAX IP access 220 to release 1020 the WiMAX resources previously allocated to the UE 210. Although release 1020 message is shown as a direct message from the FAF 260 to the WiMAX IP access 220, it could be sent indirectly via a Release Resources message directed to the PDN-GW 280, which is then relayed by the PDN-GW 280 to the WiMAX IP Access 220.

Meanwhile, the MME 240 informs the target S-GW 270 that the MME 240 is responsible for all the bearers the UE 210 has established and sends an Update Bearer Request message 1032 to the target S-GW 270. The message 1032 includes the IP address of the PDN-GW 280 that was previously retrieved 850 from the HSS/AAA 290 as shown in FIG. 8. Based on the Update Bearer Request message 1032 from the MME 240, the target S-GW 270 initiates a PMIPv6 registration procedure towards the PDN-GW 280 by sending a PMIPv6 Proxy Binding Update 1034 according to Proxy MIPv6 IETF draft specification (draft-ietf-netlmm-proxymip6). The PDN-GW 280 responds with a PMIPv6 Proxy Binding Update acknowledgement 1036 and updates its mobility binding, which effectively switches the PMIPv6 tunnels 816, 817 (FIG. 8) to have end points between the PDN-GW 280 and the target S-GW 270. In the PMIPv6 Proxy Binding Update acknowledgement 1036, the PDN-GW 280 responds with the same IP address or prefix that was assigned to the UE 210 earlier (when the UE was allocated an IP address for access through the non-3GPP network). A PMIPv6 tunnel 1056 now exists between the PDN-GW 280 and the target S-GW 270. The PMIPv6 protocol described is merely an example. GPRS Tunneling Protocol (GTP) as specified in 3GPP US 23.401 could alternately be used to update the mobility binding at the PDN-GW 280.

The target S-GW 270 returns an Update Default Bearer Response message 1038 to the MME 240 as specified in 3GPP TS 23.401 Section 5.3.3. This message includes the IP address of the UE 210 and serves as an indication to the MME 240 that the binding has been successful. Now, the UE 210 can resume data communication over a path of a data session over E-UTRAN 1050. The path includes a radio and S1 bearer connection 1053 between the UE 210 and the target S-GW 270, the PMIPv6 tunnel 1056 between the target S-GW 270 and the PDN-GW 280, and an IP connection 1059 to an operator's IP network 205 (shown in FIG. 2) or the Internet or an intranet 108 (shown in FIG. 1). Next, the UE 210 performs a Tracking Area update procedure 1060 according to 3GPP TS 23.401 Section 5.3.3 to update the Home Subscriber Server (HSS/AAA 290) with the identity of the MME 240 currently serving the UE 210.

By moving some time-consuming authorization and authentication procedures to a preparation phase of a non-3GPP IP access to 3GPP access inter-RAT handover, preparing wireless resources at the target 3GPP cell in advance of the handover during the preparation phase, and using an FAF with an MME emulator, the latency of handover execution can be reduced. Instead of a non-3GPP IP access to 3GPP access inter-RAT handover looking like a complete attach (with authentication, MME context creation, and radio and S1 bearer setup), the handover execution now behaves much like a simpler inter-RAT 3GPP-to-3GPP procedure in accordance with 3GPP TS 23.401 Section 5.5.2.2.2. Because the handover execution behaves like a 3GPP-to-3GPP handover, time-consuming authentication and authorization procedures, plus resource preparation procedures, can be skipped during the handover execution. Thus, the non-3GPP IP access to E-UTRAN access inter-RAT handover reduces latency of handover execution using a single radio while avoiding any changes to the evolved packet core. Because communication between the UE and the FAF take place over an IP layer, there is also no impact on the non-3GPP access. Therefore, the pre-registration phase is applicable to any type of non-3GPP access network without requiring modifications to the non-3GPP access.

Although the FAF 260 is shown as having a relay 263 co-located with an MME emulator 266, the MME emulator 266 may alternately be co-located with an MME 240. In that situation, the relay 263 of the FAF 260 would receive messages from the UE 210 and relay messages to the MME/MME emulator and vice versa. If a co-located MME emulator 266 were incorporated into a standard MME 240, the result would be a modified MME. Although this would force a change to the Evolved Packet Core 203, the single-radio UE handover latency would still be decreased relative to existing non-3GPP to 3GPP inter-RAT handovers.

While this disclosure includes what are considered presently to be the embodiments and best modes of the invention described in a manner that establishes possession thereof by the inventors and that enables those of ordinary skill in the art to make and use the invention, it will be understood and appreciated that there are many equivalents to the embodiments disclosed herein and that modifications and variations may be made without departing from the scope and spirit of the invention, which are to be limited not by the embodiments but by the appended claims, including any amendments made during the pendency of this application and all equivalents of those claims as issued.

It is further understood that the use of relational terms such as first and second, top and bottom, and the like, if any, are used solely to distinguish one from another entity, item, or action without necessarily requiring or implying any actual such relationship or order between such entities, items or actions. Much of the inventive functionality and many of the inventive principles are best implemented with or in software programs or instructions. It is expected that one of ordinary skill, notwithstanding possibly significant effort and many design choices motivated by, for example, available time, current technology, and economic considerations, when guided by the concepts and principles disclosed herein will be readily capable of generating such software instructions and programs with minimal experimentation. Therefore, further discussion of such software, if any, will be limited in the interest of brevity and minimization of any risk of obscuring the principles and concepts according to the present invention.

As understood by those in the art, an FAF includes a processor that executes computer program code to implement the methods described herein. Embodiments include computer program code containing instructions embodied in tangible media, such as floppy diskettes, CD-ROMs, hard drives, or any other computer-readable storage medium, wherein, when the computer program code is loaded into and executed by a processor, the processor becomes an apparatus for practicing the invention. Embodiments include computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

## Claims

1. A method for handing over a user equipment (UE) from a non-3GPP radio access to a 3GPP radio access network comprising:
receiving a pre-attach request message from the UE including a unique identifier for the UE through the non-3GPP radio access;
receiving security information for the UE from a home subscriber server (HSS) and authenticating the UE;
creating a mobility management context for the UE including the unique identifier for the UE, a tracking area identifier, a temporary identifier for the UE, and a security context for the UE;
transferring the mobility management context to a mobility management entity (MME); and
initiating resource preparation at a target 3GPP access cell.

2. A method according to claim 1 wherein the pre-attach request message includes:
a Target E-UTRAN Cell ID for the UE.

3. A method according to claim 2 wherein the transferring and the initiating comprises:
sending a forward relocation request to the MME and receiving a forward relocation request acknowledgement from the MME.

4. A method according to claim 3 further comprising:
sending a pre-attach accept message with a handover command to the UE.

5. A method according to claim 3 further comprising:
receiving a forward relocation complete message; and
directing the non-3GPP radio access to release resources supporting the UE.

6. A method according to claim 1 wherein the pre-attach request message does not include a Target 3GPP Cell ID for the UE.

7. A method according to claim 6 further comprising:
after the creating, transmitting a pre-attach accept message to the UE.

8. A method according to claim 7 wherein the pre-attach accept message does not include a handover command to the UE.

9. A method according to claim 7 further comprising:
receiving a next pre-attach request message including a Target 3GPP Cell ID.

10. A method according to claim 9 wherein the transferring and the initiating comprises:
after receiving the next pre-attach request message, sending a forward relocation request to the MME and receiving a forward relocation request acknowledgement from the MME.

11. A method according to claim 10 further comprising:
receiving a forward relocation complete message; and
directing the non-3GPP radio access to release resources supporting the UE.

12. A method according to claim 6 further comprising:
receiving a relocation required message from the non-3GPP access.

13. A method according to claim 12 further comprising:
sending a forward relocation request to the MME and receiving a forward relocation request acknowledgement from the MME; and
transmitting a relocation required acknowledgement to the non-3GPP radio access.

14. A method according to claim 13 further comprising:
receiving a forward relocation complete message; and directing the non-3GPP radio access to release resources supporting the UE.

15. A method according to claim 1 further comprising:
setting up a data session from the UE to a target serving gateway; and
performing a tracking area update procedure.

16. A method for a user equipment (UE) to hand over from a non-3GPP radio access to a 3GPP radio access network comprising:
transmitting a pre-attach request message including a unique identifier for the UE through the non-3GPP radio access to a Forward Attach Function (FAF);
participating in authentication of the UE by the FAF; and
receiving a handover command from the FAF.

17. A method according to claim 16 wherein the pre-attach request message includes:
a Target E-UTRAN Cell ID.

18. A method according to claim 17 further comprising:
transmitting a Handover to E-UTRAN Complete message after camping on a E-UTRAN access with the Target E-UTRAN Cell ID.

19. A method according to claim 16 wherein the pre-attach request message does not include a Target 3GPP Cell ID.

20. A method according to claim 19 further comprising:
before the receiving, transmitting a next pre-attach request message including a Target E-UTRAN Cell ID.

21. A method according to claim 20 further comprising:
transmitting a Handover to E-UTRAN Complete message after camping on a E-UTRAN access with the Target E-UTRAN Cell ID.
